# EUROPEAN PATENT SPECIFICATION

(11) **EP 2 608 146 B1**
(45) Date of publication and mention of the grant of the patent: **25.12.2019**
(21) Application number: 11818205.4
(22) Date of filing: 17.08.2011
(51) Int. Cl.: B60L 50/50

(54) **MANAGEMENT DEVICE, METHOD OF MANAGEMENT, COMPUTER PROGRAM, MANAGEMENT SYSTEM, AND MANAGEMENT METHOD**
MANAGEMENTVORRICHTUNG, MANAGEMENTVERFAHREN, COMPUTERPROGRAMM, MANAGEMENTSYSTEM UND MANAGEMENTVERFAHREN
DISPOSITIF DE GESTION, PROCÉDÉ DE GESTION, PROGRAMME D'ORDINATEUR, SYSTÈME DE GESTION ET PROCÉDÉ DE GESTION

(30) Priority: 20.08.2010 JP 2010185247
(43) Date of publication of application: 26.06.2013
(73) Proprietor: Mitsubishi Heavy Industries, Ltd., Tokyo 108-8215 (JP)
(72) Inventor: MURATA Tomohiro, Tokyo 108-8215 (JP); ONO Hidekazu, Tokyo 108-8215 (JP); UCHIDA Ken, Tokyo 108-8215 (JP)
(74) Representative: Henkel & Partner mbB
(86) International application number: PCT/JP2011/068597
(87) International publication number: WO 2012/023564

(56) References cited:
- WO-A1-2009/039454
- WO-A1-2009/039454
- WO-A1-2010/115573
- JP-A- 6 327 152
- JP-A- 2009 171 823
- JP-A- 2011 130 597
- US-A1- 2009 210 357
- US-A1- 2010 094 496
- US-A1- 2010 191 996

## Description

### TECHNICAL FIELD

The present invention relates to technology of managing power supply to multiple areas.

### BACKGROUND ART

US 2009/0210357 A1 discloses a remote power usage management for plug-in vehicles.

US 2010/0094496 A1 discloses a system and a method for operating an electric vehicle.

WO 2010/115573 discloses an electric vehicle having a GPS-based gas station reservation function.

WO 2009/039454 A1 discloses an electric vehicle network and relationships between a vehicle's user, a service provider, a power provider, and/or a financial institute.

In order to charge batteries of charging devices, a charging control method of suppressing loads on power supply facilities and power systems, thereby managing the remaining charging amount more sophisticatedly, has been proposed (see Patent Document 1). Regarding the technology disclosed in Patent Document 1, the remaining charging amount of a battery is monitored. Then, charging control information including information of a period for charging the battery is determined based on control factor information including charging recommended period information and the remaining charging amount on the power supplying side. Then, the battery is charged based on the charging control information.

### CITATION LIST

### - additional version with marked amendments -

### [Patent Document]

[Patent Document 1] Japanese Patent Laid-Open Publication No. 2008-67418

### DISCLOSURE OF INVENTION

### Problems to be Solved by the Invention

Regarding the technology disclosed in Patent Document 1, it is assumed to be possible to supply power even if all batteries are charged in the charging recommended period (period in which a power demand is lowered) on the power supplying side. However, such an assumption will be occasionally denied when electric cars are widespread, thereby causing various problems. When a battery included in an electric car is charged, a significant amount of power is consumed. For example, according to recent statistics, the power supplied by one nuclear power plant is sufficient only to charge about 20,000 electric cars. For this reason, if a large number of electric cars are widespread and electric cars are simultaneously charged in a particular area and time in future, negative effects, such as a shortage of power supply to that area, might occur.

In view of the above situations, an object of the present invention is to provide technology of preventing a shortage of power supply in a situation where batteries of electric cars are charged.

### Means for Solving the Problems

A management device according to the present invention includes: a vehicle information receiver configured to receive from a vehicle configured to travel by power, vehicle information relating to travel of the vehicle; a power information receiver configured to receive from a local power management device configured to control power supply to a power network in each area, power information relating to power for the power network; a charging information estimator configured to estimate, for each vehicle, an area in which the vehicle performs charging of power the next time, based on the vehicle information; and a local power consumption estimator configured to estimate a power consumption amount for the power network in each area, based on a result of estimation by the charging information estimator and the power information.

The management device may further include a local charging amount estimator configured to estimate the total amount of power consumption for the power network in each area, the power consumption being caused by the charging of power to the vehicle. In this case, the local power consumption estimator is configured to estimate a power consumption amount for the power network in each area, based on a result of estimation by the local charging amount estimator and the power information.

The management device may further include: a complementary information generator configured to estimate a surplus or shortage of a power supply amount for the power network in each area, based on the result of estimation by the local power consumption amount estimator and the power information, the complementary information generator being configured to generate complementary information for instructing to distribute a part of all of power supply to a power network in an area estimated to have a surplus in the power supply amount, to a power network in an area estimated to be short of the power supply amount; and a complementary information transmitter configured to transmit the complementary information to the local power management device.

The management device may further include: a travel range estimator configured to estimate, for each vehicle, a travel range that the vehicle travels by the time at which the vehicle performs the charging of power the next time; a surplus estimator configured to estimate a surplus or shortage of a power supply amount for the power network in each area, based on the result of estimation by the local power consumption amount estimator and the power information; a power stand database configured to store information indicating a position of a power stand at which the charging of power to the vehicle is performed and a power network to be supplied with power; and a reporter configured to search from the power stand database, a power stand to be supplied with power from the power network that is present in the travel range and estimated by the surplus estimator to have a surplus of the power supply amount, the reporter being configured to report information of the power stand to the vehicle.

A management method according to another aspect of the present invention includes: a step of receiving from a vehicle configured to travel by power, vehicle information relating to travel of the vehicle; a step of receiving from a local power management device configured to control power supply to a power network in each area, power information relating to power for the power network; a step of estimating, for each vehicle, an area in which the vehicle performs charging of power the next time, based on the vehicle information; and a step of estimating a power consumption amount for the power network in each area, based on a result of estimation by the charging information estimator and the power information.

A computer program according to another aspect of the present invention causes a computer to execute: a step of receiving from a vehicle configured to travel by power, vehicle information relating to travel of the vehicle; a step of receiving from a local power management device configured to control power supply to a power network in each area, power information relating to power for the power network; a step of estimating, for each vehicle, an area in which the vehicle performs charging of power the next time, based on the vehicle information; and a step of estimating a power consumption amount for the power network in each area, based on a result of estimation by the charging information estimator and the power information.

A management system according to another aspect of the present invention includes: a management device; a local power management device configured to control power supply to a power network in each area; and an in-vehicle device configured to be mounted on a vehicle configured to travel by power. The in-vehicle device includes: a vehicle information acquirer configured to acquire vehicle information relating to travel of the vehicle; and a communication unit configured to transmit the vehicle information to the management device. The management device includes: a vehicle information receiver configured to receive the vehicle information; a power information receiver configured to receive power information relating to power for the power network; a charging information estimator configured to estimate, for each vehicle, an area in which the vehicle performs charging of power the next time; and a local power consumption estimator configured to estimate a power consumption amount for the power network in each area, based on a result of estimation by the charging information estimator and the power information.

Regarding the management system, the management device may further include: a travel range estimator configured to estimate, for each vehicle, a travel range that the vehicle travels by the time at which the vehicle performs the charging of power the next time; a surplus estimator configured to estimate a surplus or shortage of a power supply amount for the power network in each area, based on the result of estimation by the local power consumption amount estimator and the power information; a power stand database configured to store information indicating a position of a power stand at which the charging of power to the vehicle is performed and a power network to be supplied with power; and a reporter configured to search from the power stand database, a power stand to be supplied with power from the power network that is present in the travel range and estimated by the surplus estimator to have a surplus of the power supply amount, the reporter being configured to report information of the power stand to the vehicle.

Regarding the management system, the in-vehicle device may further include an output unit configured to output information to a crew of the vehicle. In this case, the communication unit is configured to receive information of the power stand from the management device, and the output unit is configured to output the information of the power stand received by the communication unit.

### Effects of the Invention

According to the present invention, it is possible to prevent a shortage of power supply in a situation where batteries of electric cars are charged.

### BRIEF DESCRIPTION OF THE DRAWINGS

FIG. 1 is a system configuration diagram illustrating a system configuration of a power management system according to a first embodiment.
FIG. 2 is a schematic block diagram illustrating a functional configuration of a vehicle device according to the first embodiment.
FIG. 3 is a schematic block diagram illustrating a functional configuration of a centralized management device according to the first embodiment.
FIG. 4A is a flowchart illustrating a process flow relating to reception of power information by the centralized management device according to the first embodiment.
FIG. 4B is a flowchart illustrating a process flow relating to reception of vehicle information by the centralized management device according to the first embodiment.
FIG. 4C is a flowchart illustrating a process flow relating to transmission of complementary information by the centralized management device according to the first embodiment.
FIG. 5 is a sequence chart illustrating a data flow between devices in the power management system according to the first embodiment.
FIG. 6 is a schematic block diagram illustrating a functional configuration of a vehicle device according to a second embodiment.
FIG. 7 is a schematic block diagram illustrating a functional configuration of a centralized management device according to the second embodiment.
FIG. 8A is a flowchart illustrating a process flow relating to calculation of a local power difference by the centralized management device according to the second embodiment.
FIG. 8B is a flowchart illustrating a process flow relating to transmission of recommendation information performed by the centralized management device according to the second embodiment.
FIG. 9 is a sequence chart illustrating a data flow between devices in the power management system according to the second embodiment.
FIG. 10 is a schematic block diagram illustrating a functional configuration of a centralized management device according to a third embodiment.

### BEST MODE FOR CARRYING OUT THE INVENTION

### (First Embodiment)

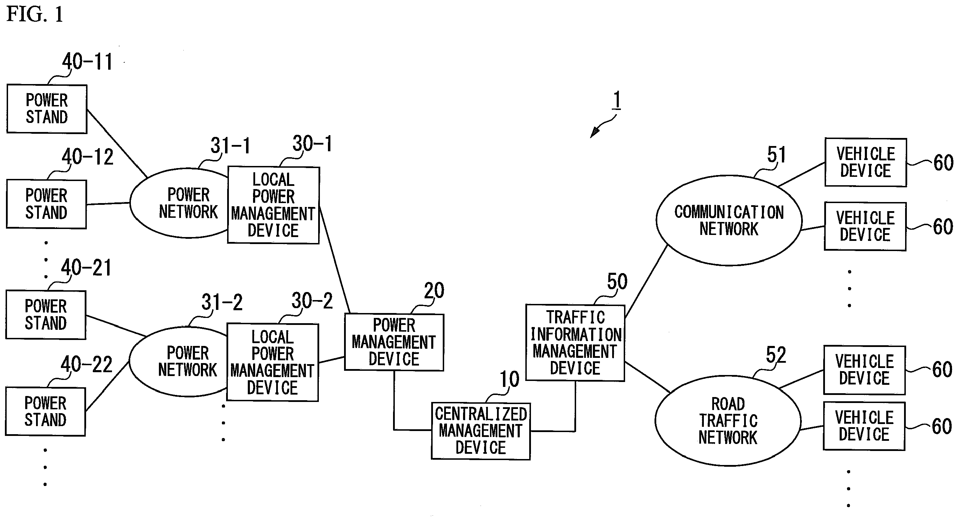

FIG. 1 is a system configuration diagram illustrating a system configuration of a power management system 1 according to a first embodiment. The power management system 1 includes: a centralized management device 10; a power management device 20; multiple local power management devices 30 (30-1, 30-2, and the like); multiple power networks 31 (31-1, 31-2, and the like); multiple power stands 40 (40-11, 40-12, 40-21, 40-22, and the like); a traffic information management device 50; a communication network 51; a road traffic network 52; and multiple vehicle devices 60.

The centralized management device 10 is accessible to the power management device 20. The power management device 20 is accessible to each local power management device 30. The local power management device 30 is provided for each power network 31 in each area and controls power to be supplied to each power network 31. Each power network 31 includes a power transmission line, a substation, a power distribution line, and the like, and implements power supply to each area. Each power stand 40 is connected to the power network 31 in the area provided with the power stand 40, and receives power supply via the power network 31.

The centralized management device 10 is accessible to the traffic information management device 50. The traffic information management device 50 is accessible to the multiple vehicle devices 60 via the communication network 51 and the road traffic network 52. The communication network 51 is configured with use of a wireless or wired IP (Internet Protocol) communication network, a communication infrastructure such as a cellular communication network, and the like. The communication network 51 relays data communicated between each vehicle device 60 and the traffic information management device 50. The road traffic network 52 is configured with use of a roadside device provided around a road, an infrastructure network connected with each roadside device, and the like. More specifically, the road traffic network 52 is configured with use of a system, such as ITS (Intelligent Transport Systems). Data is communicated between each vehicle device 60 and the roadside device is performed by wireless communication, such as DSRC (Dedicated Short Range Communication). The road traffic network 52 relays data communicated between each vehicle device 60 and the traffic information management device 50.

Next, each device included in the power management system 1 is explained.

The centralized management device 10 is configured with use of information processing devices, such as a mainframe, a workstation, and a personal computer. The centralized management device 10 manages power to be supplied to the power network 31 in each area, based on power information collected by the power management device 20 and the vehicle information collected by the traffic information device 50. Here, the power information is information indicating the amount of power supplied to the power network 31 in each area (power supply amount) and a chronological change in the amount of power being consumed (power consumption amount). Additionally, the vehicle information is information relating to vehicles each including a vehicle device 60. Here, the power information is not necessarily the information indicating the chronological change. For example, the power information may be information indicating the power supply amount and the power consumption amount at a predetermined timing.

The power management device 20 is configured with use of information processing devices, such as a mainframe, a workstation, and a personal computer. The power management device 20 collects power information for each area, from multiple local power management devices 30. Then, the power management device 20 transmits the power information for each area to the centralized management device 10.

The local power management device 30 is configured with use of information processing device, such as a mainframe, a workstation, and a personal computer. The local power management device 30 is provided for each power network 31 in each area and controls the power supply to each power network 31. Additionally, the local power management device 30 generates power information for the power network 31 in each area. For example, the local power management device 30 monitors the power supply amount and the power consumption amount in the power network 31 in the area provided with the local power management device 30. Then, the local power management device 30 generates power information at every predetermined timing (for example, every 30 minutes, every an hour, every several hours, or every day). At this time, the local power management device 30 adds to the power information, identification information (area identification information) preliminarily allocated to the power network 31 in each area. Here, the power supplied to the power network 31 includes: power generated by large-scale and centralized power generating facilities (such as thermal power plants, wind power plants, hydro power plants, and nuclear power plants); power generated by distributed power generating facilities (such as solar power generating facilities, and wind power generating facilities) provided by individual or corporate persons in each area; and power stored by charging facilities (such as fuel batteries). For this reason, the local power management device 30 monitors not only power supply from the large-scale and centralized power generating facilities, but also power supply from the distributed power generating facilities.

The power stand 40 is connected to the power network 31 in each area, and charges a battery using the power supplied from the power network 31. The battery to be charged by the power stand 40 is, for example, a battery provided in an electric car including the vehicle device 60. In this case, a driver of the electric car including the vehicle device 60 connects a charging plug to the battery of the electric car at the power stand 40, and performs a predetermined procedure, thereby charging the battery.

The traffic information management device 50 is configured with use of information processing devices, such as a mainframe, a workstation, and a personal computer. The traffic information management device 50 collects vehicle information of each vehicle from the multiple vehicle devices 60. Then, the traffic information management device 50 transmits the vehicle information of each vehicle to the centralized management device 10.

The vehicle device 60 is an information processing device provided for each electric car. From an electric car including the vehicle device 60, the vehicle device 60 collects, as vehicle information, information such as: battery use information; vehicle use information; position information; destination information; and identification information (vehicle identification information) previously allocated to the vehicle device 60. The battery use information is information indicating a chronological change in the remaining power amount of the battery or the remaining power amount at the present time. The vehicle use information is information relating to use of a vehicle (electric car), such as information indicating a chronological change in velocity, a chronological change in power consumption, and the like. The position information is information indicating the present position of the vehicle, the route travelled so far, and the like. The destination information is information indicating a destination toward which the vehicle is travelling.

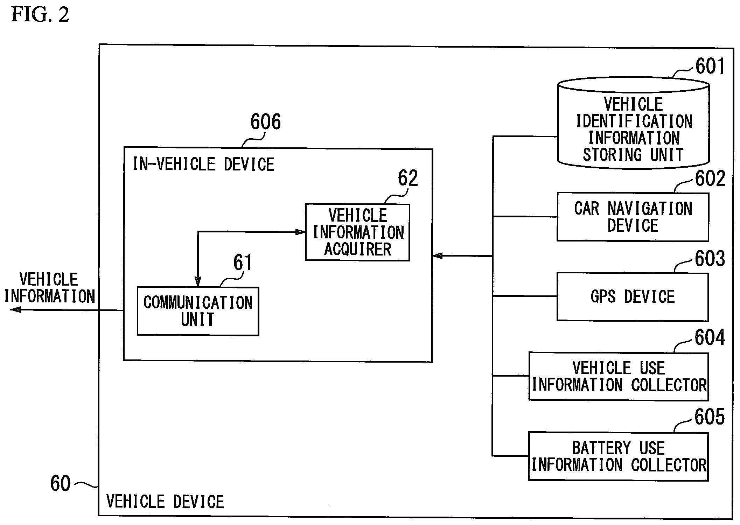

FIG. 2 is a schematic block diagram illustrating a functional configuration of the vehicle device 60 according to the first embodiment. The vehicle device 60 includes: a vehicle identification information storing unit 601; a car navigation device 602; a GPS device 603; a vehicle use information collector 604; a battery use information collector 605; an in-vehicle device 606; and the like. The vehicle identification information storing unit 601 is configured with use of a memory device, such as a semiconductor memory device or a magnetic hard disk device. The vehicle identification information storing unit 601 stores vehicle identification information. The car navigation device 602 is an existing car navigation device. The car navigation device 602 is operated by a driver or passenger of an electric car (hereinafter collectively referred to as "crews") or the like. The car navigation device 602 receives input of information relating to a destination. The information relating to a destination includes an address of the destination, a telephone number of a store to which the crews want to go (desired store), the name of the desired store, and the like. The car navigation device 602 determines a destination based on the input information relating to the destination. The GPS device 603 is an existing GPS (Global Positioning System) device, and acquires coordinates of the present position of the vehicle mounted with the vehicle device 60. The vehicle use information collector 604 is connected to an engine or a speedometer of the vehicle mounted with the vehicle device 60, and monitors the traveling speed and the power consumption of the vehicle, thereby collecting vehicle use information. The battery use information collector 605 is connected to a battery of the vehicle mounted with the vehicle device 60, and monitors the battery, thereby collecting battery use information. Each of the above information may be acquired by another method.

The in-vehicle device 606 includes a CPU (Central Processing Unit), a memory, an auxiliary memory device, and the like, and performs an in-vehicle program. The in-vehicle device 606 functions as a device including a communication unit 61 and a vehicle information acquirer 62. Here, part or all of the functions of the in-vehicle device 606 may be implemented by hardware, such as an ASIC (Application Specific Integrated Circuit), a PLD (Programmable Logic Device), or an FPGA (Field Programmable Gate Array).

The communication unit 61 performs wireless communication with the communication network 51 and the road traffic network 52. For example, the communication unit 61 performs wireless communication with roadside devices, using the DSRC. The communication unit 61 instructs, at every predetermined timing, the vehicle information acquirer 62 to acquire vehicle information. Then, the communication unit 61 transmits the vehicle information acquired by the vehicle information acquirer 62, to the traffic information management device 50 via the communication network 51 and the road traffic network 52.

Upon being instructed by the communication unit 61 to acquire vehicle information, the vehicle information acquirer 62 acquires vehicle information in accordance with that instruction. Specifically, the vehicle information acquirer 62 acquires vehicle identification information from the vehicle identification information storing unit 601; acquires destination information from the car navigation device 602; acquires position information from the GPS device 603; acquires vehicle use information from the vehicle use information collector 604; and acquires battery use information from the battery use information collector 605. The vehicle information acquirer 62 may be accessible to the vehicle use information collector 604 and the battery use information collector 605 via an in-vehicle network, such as a CAN-BUS. Alternatively, the vehicle information acquirer 62 may be connected directly to each unit of those devices by cables.

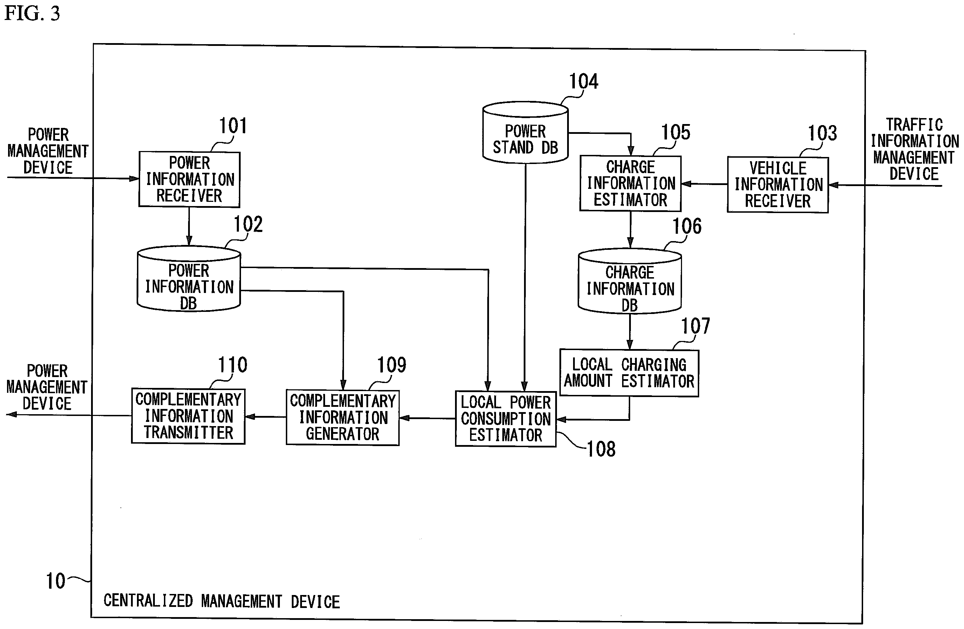

FIG. 3 is a schematic block diagram illustrating a functional configuration of the centralized management device 10 according to the first embodiment. The centralized management device 10 includes a CPU, a memory, an auxiliary memory device, and the like, which are connected by buses, and performs a centralized management program. The centralized management device 10 includes: a power information receiver 101; a power information DB 102; a vehicle information receiver 103; a power stand DB 104; a charging information estimator 105; a charging information DB 106; a local charging amount estimator 107; a local power consumption amount estimator 108; a complementary information generator 109; and a complementary information transmitter 110. Here, part or all of the functions of the centralized management device 10 may be implemented by hardware, such as an ASIC, a PLD, or an FPGA.

The power information receiver 101 is configured with use of a device having a communication function. The power information receiver 101 receives from the power management device 20 via the network, power information generated by the each local power management device 30.

The power information DB 102 is configured with use of a memory device, such as a magnetic hard disk device or a semiconductor memory device. The power information DB 102 stores the latest power information received by the power information receiver 101, while associating the latest power information with area identification information. More specifically, upon receiving power information from the power information receiver 101, the power information DB 102 determines whether or not the power information has already been stored in association with the same area identification information. If the power information has already been stored, the power information DB 102 updates old power information to the new power information. On the other hand, if no power information has already been stored in association with the same area identification information, the power information DB 102 newly stores that power information while associating the power information with the area identification information.

The vehicle information receiver 103 is configured with use of a device having a communication function. The vehicle information receiver 103 receives from the traffic information management device 50 via the network, vehicle information generated by the vehicle device 60. The vehicle information received by the vehicle information receiver 103 may be vehicle information generated by one vehicle device 60, or vehicle informations of respective vehicles which are generated by multiple vehicle devices 60.

The power stand DB 104 is configured with use of a memory device, such as a magnetic hard disk device or a semiconductor memory device. The power stand DB 104 stores a power stand information table. The power stand information table includes information indicating the installed positions and the belonging areas with respect to the multiple power stands 40. The belonging area is information indicating from which power network 31 the power stand 40 is to receive power supply.

The charging information estimator 105 estimates, for each vehicle information received from the vehicle information receiver 103, charging information relating to the vehicle mounted with the vehicle device 60 that is the transmission source of the vehicle information. The charging information is information including: the position of the power stand 40 at which the battery of the vehicle is charged next; the time at which the charging is performed; and power consumption at the time of charging at the power stand 40.

For example, based on the remaining power amount at the present time and the chronological change in power consumption per unit time which are included in the vehicle information, the charging information estimator 105 calculates the distance that the vehicle can travel without being charged (allowable travel distance). Then, based on the present position of the vehicle, the destination toward which the vehicle is traveling, and the calculated allowable travel distance, the charging information estimator 105 estimates one or more routes (estimated travel route) where the vehicle is likely to travel and can travel without being charged. Then, the charging information estimator 105 refers to the power stand information table stored in the power stand DB 104, and searches one or more power stands 40 positioned along the estimated travel route or a vicinity thereof.

Additionally, based on the present traveling speed of the vehicle and the present time, the charging information estimator 105 estimates, for each position of the power stand 40 searched, the time at which the vehicle arrives at the power stand 40 and the charging is performed. Additionally, the charging information estimator 105 calculates, for each position of the power stand 40 searched, calculates the distance from the present position of the vehicle to the position of the power stand 40, and estimates the power to be consumed in accordance with the distance traveled. Then, based on a result of the estimation and the present remaining power amount, the charging information estimator 105 estimates power consumption at the power stand 40 when charging is performed so as to achieve the 100% charging amount. By the above process, the charging information is estimated. Here, the above specific process is just an example, and charging information may be estimated by another process.

The charging information DB 106 is configured with use of a memory device, such as a magnetic hard disk device or a semiconductor memory device. The charging information DB 106 stores the latest charging information estimated by the charging information estimator 105, while associating the latest charging information with the vehicle identification information. More specifically, upon receiving the charging information from the charging information estimator 105, the charging information DB 106 determines whether or not the charging information has already been stored in association with the same vehicle identification information. If the charging information has already been stored, the charging information DB 106 updates the old charging information to the new charging information. On the other hand, if no charging information is stored in association with the same vehicle identification information, the charging information DB 106 newly stores that charging information while associating that charging information with the vehicle identification information.

The local charging amount estimator 107 estimates the local charging amount for the power network 31 in each area, based on the charging information stored in the charging information DB 106. The local charging amount indicates the total amount of power consumption within a predetermined period, which is caused by charging an electric car at the power stand 40. For example, the local charging amount estimator 107 detects, from among charging information of each vehicle stored in the charging information DB 106, charging information indicating that the estimated time at which charging is performed is within a predetermined period (for example, within 3 hours) from the present time. The local charging amount estimator 107 clusters each charging information searched, for each area to which the power stand 40 corresponding to the charging information belongs. Then, the local charging amount estimator 107 calculates, for each belonging area, the total amount of power consumption estimated. Here, the above specific process is just an example, and the local charging amount may be estimated by another process.

The local power consumption estimator 108 estimates the amount of local power consumption for the power network 31 in each area, based on the result of the estimation of the local charging amount performed by the local charging amount estimator 107 and the power information stored in the power information DB 102. The local consumption power amount represents the total amount of power consumption within a predetermined period for the power network 31 in each area. For example, the local power consumption estimator 108 estimates the total amount of power consumption (general power consumption amount) obtained by subtracting the power consumption at the power stand 40 from the power consumption within a predetermined period measured from the present time. This estimation process is performed based on an existing estimation algorithm or the like. Then, the local power consumption estimator 108 calculates a sum of the result of the estimation of the local charging amount performed by the local charging amount estimator 107 and the result of the estimation of the general power consumption amount, thereby estimating the local power consumption amount. Here, the above specific process is just an example, and the local power consumption amount may be estimated by another process.

The complementary information generator 109 generates complementary information with respect to the power network 31 in each area, based on the result of the estimation of the local power consumption performed by the local power consumption power estimator 108 and the power information stored in the power information DB 102. The complementary information is information that instructs to distribute part of the power supply to the power network 31 in the area estimated to have a surplus in the amount of power supply, to the power network 31 in the area estimated to be short of the amount of power supply. For example, the complementary information represents area identification information of the power network 31 to be a destination (or a source) of the surplus power, the amount of the surplus power to be supply (or to be supplied), and the time at which power supply is performed.

For example, the complementary information generator 109 estimates the total amount of power supply within a predetermined period from the present time (for example, within three hours), based on information indicating a chronological change in the amount of power supply in each area, the past statistics, and the like. This estimation process is performed based on an existing algorithm or the like. Then, the complementary information generator 109 subtracts the result of the estimation of the local power consumption from the result of the estimation of the total amount of power supply, thereby estimating the amount of surplus power. At this time, if the result of the subtraction is a negative value, the result of the estimation indicates a shortage (the deficient power amount). The complementary information generator 109 estimates the surplus power amount or the deficient power amount for each power network 31. Then, the complementary information generator 109 determines to distribute power from the power network 31 estimated to have a surplus in power, to the power network 31 estimated to be short of power. Then, based on this result, the complementary information generator 109 generates, as complementary information, information indicating an instruction to distribute to each local power management device 30. Here, the above specific process is just an example, and the complementary information may be generated by another process.

The complementary information transmitter 110 is configured with use of a device having a communication function. The complementary information transmitter 110 transmits the complementary information generated by the complementary information generator 109, to the power management device 20 via the network. The power management device 20 transmits the complementary information to each local power management device 30. Upon receiving the complementary information, each local power management device 30 supplies the surplus power to the power network 31 in another area or receives power from the power network 31 in another area, in accordance with the instructions included in the complementary information.

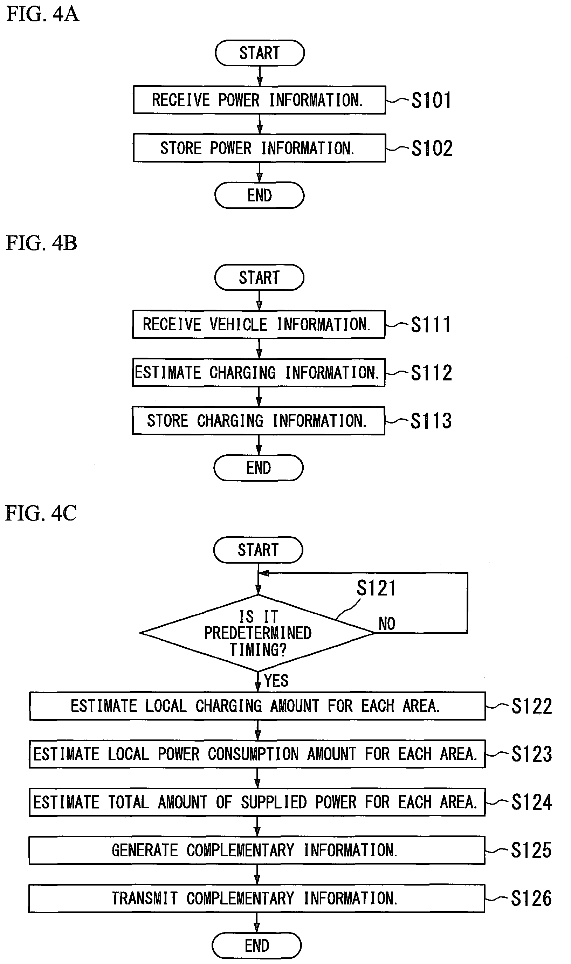

FIGS. 4A to 4C are flowcharts illustrating process flows for the centralized management device 10 according to the first embodiment. FIG. 4A is a flowchart illustrating a process flow relating to reception of power information. FIG. 4B is a flowchart illustrating a process flow relating to reception of vehicle information. FIG. 4C is a flowchart illustrating a process flow relating to reception of complementary information. Hereinafter, each process flow for the centralized management device 10 is explained.

Firstly, the process relating to reception of power information is explained with reference to FIG. 4A. When the power information receiver 101 receives power information from the local power management device 30 (step S101), the power information DB 102 stores the latest power information received while associating the latest power information with the vehicle identification information (step S102).

Next, the process relating to reception of vehicle information is explained with reference to FIG. 4B. If the vehicle information receiver 103 receives vehicle information from the traffic information management device 50 (step S111), the charging information estimator 105 estimates charging information based on the received vehicle information (step S112). Then, the charging information DB 106 stores the latest charging information estimated by the charging information estimator 105, while associating the latest charging information with the vehicle identification information (step S113).

Next, the process relating to transmission of complementary information is explained with reference to FIG. 4C. The local charging estimator 107 is in an idle state until a predetermined timing (step S121: NO). The predetermined timing may be, for example, at a predetermined time interval (such as every thirty minutes, every an hour, every half a day, every day), a timing at which an instruction is input from another system or by a manager, or another timing.

At the predetermined timing (step S121: YES), the local charging amount estimator 107 estimates the local charging amount for each area, based on the charging information stored in the charging information DB 106 (step S122). Then, the local power consumption estimator 108 estimates the local power consumption amount for each area (step SI23). Then, the complementary information generator 109 estimates the total amount of power supply to each area (step S124). Then, the complementary information generator 109 generates complementary information based on the result of the estimation of the power supply to each area and the result of the estimation of the local power consumption (step S125). At this time, the complementary information generator 109 adds the area identification information to the complementary information for each area. Then, the complementary information transmitter 110 transmits to the power management device 20, the complementary information generated by the complementary information generator 109 (step S126).

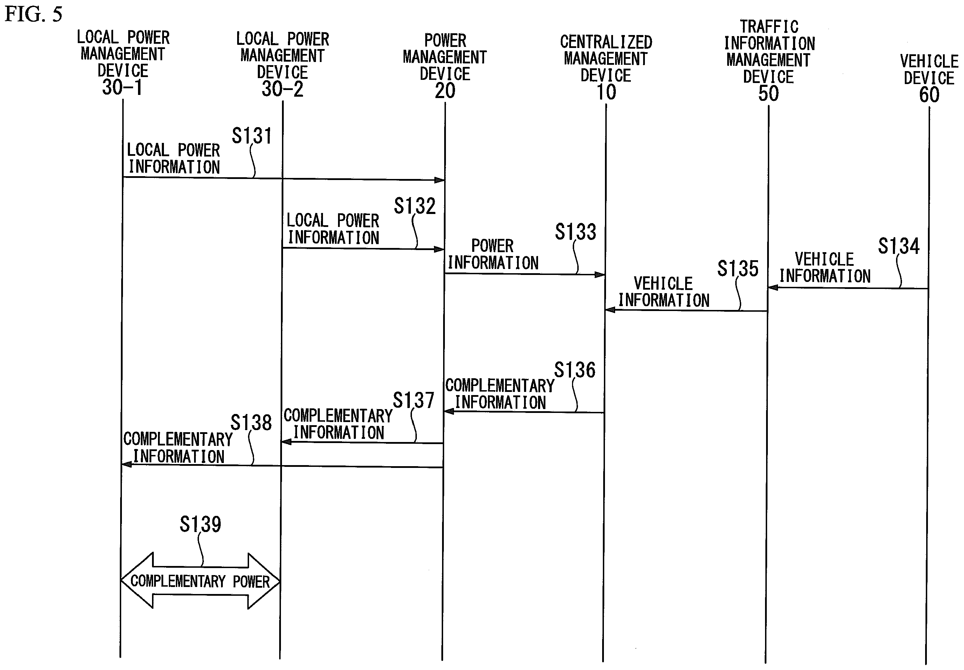

FIG. 5 is a sequence chart illustrating a data flow among devices in the power management system 1 according to the first embodiment. The local power management device 30 that manages the power network 31 in each area transmits the local power information to the power management device 20 at every predetermined timing. In the case of FIG. 5, the local power management device 30-1 that manages the power network 31-1 transmits the local power information to the power management device 20 (step S131). Additionally, the local power management device 30-2 that manages the power network 31-2 transmits the local power information to the power management device 20 (step S132). Here, the predetermined timing may be, for example, at a predetermined time interval (such as every thirty minutes, every an hour, every half a day, every day), a timing at which an instruction is input from another system or by a manager, or another timing.

At every predetermined timing, the power management device 20 transmits to the centralized management device 10, the power information received from each local power management device 30 (step S133). Here, the predetermined timing may be a timing at which local power informations are received from all the local power management devices 30 connected to the power management device 20, or at a predetermined time interval (for example, every thirty minutes, every an hour, every half a day, every day), a timing at which an instruction is input from another system or by a manager or the like, or another timing.

Each vehicle device 60 transmits the vehicle information to the traffic information management device 50 at every predetermined timing (step S134). Here, the predetermined timing may be, for example, a timing at which the communication unit 61 receives a vehicle information request from a roadside device. In this case, the roadside device provided around a road transmits the vehicle information request. Then, in accordance with the vehicle information received from the roadside device, the communication unit 61 instructs the vehicle information acquirer 62 to acquire vehicle information. Then, the communication unit 61 transmits via the roadside device, the vehicle information acquired by the vehicle information acquirer 62. The timing at which the roadside device transmits the vehicle information request may be a predetermined cycle measured by a clock or the like provided in the roadside device, a timing at which the roadside device receives from an external device (such as the centralized management device 10 or the traffic information management device 50), an instruction to transmit a vehicle information request, or another timing. Additionally, the above predetermined timing may be at a predetermined time interval (for example, every thirty minutes, every an hour, every ten hours, every half a day, or every day) from the time at which a vehicle mounted with the vehicle device is powered on, a timing at which a destination is set, a timing at which an instruction is input from another system or by a manager or the like, or another timing.

At every predetermined timing, the traffic information management device 50 transmits to the centralized management device 10, the vehicle information received from each vehicle device 60 (step S135). Here, the predetermined timing may be, for example, every time one vehicle information is received, every time a predetermined number of vehicle informations are received, at a predetermined time interval (such as every thirty minutes, every an hour, every ten hours, every half a day, or every day), a timing at which an instruction is received from another system, a manager or the like, or another timing.

The centralized management device 10 generates complementary information at the aforementioned predetermined timing. Then, the centralized management device 10 transmits to the power management device 20, the complementary information with respect to the local power management device 30 in each area (step S136). The power management device 20 transmits each complementary information to the local power management device 30 corresponding to the area identification information. In the case of FIG. 5, the power management device 20 transmits to the local power management device 30-2 managing the power network 31-2, the complementary information added with the area identification information corresponding to that area (step SI37). Additionally, the power management device 20 transmits to the local power management device 30-1 managing the power network 31-1, the complementary information added with the area identification information corresponding to that area (step S138). Thereafter, each local power management device 30 performs power control in accordance with the received complementary information. For example, if the complementary information with respect to the local power management device 30-1 indicates an instruction to supply 50% of the surplus power to the power network 31-2, the local power management device 30-1 supplies 50% of the surplus power to the power network 31-2 in accordance with that information. In this case, the local power management device 30-2 receives the supply of the surplus power from the local power management device 30-1 in accordance with the complementary information (step S139).

In the power management system 1 according to the first embodiment which has the above configuration, vehicle information is collected from the vehicle device 60 mounted on an electric car. Then, the area, the time, and power consumption, at which a battery of each electric car is charged, are estimated. Then, based on the result of the estimation, the surplus power amount or the deficient power amount for the power network 31 in each area is estimated. Based on the result of that estimation, power supply from the power network 31 estimated to have a surplus in power to the power network 31 estimated to be short of power is implemented. For this reason, it is possible to prevent a shortage of power supply to each power network 31 in the situation where a battery of an electric car is charged.

Additionally, in the power management system 1 according to the first embodiment, power information generated by each local power management device 30 is collected, and the total amount of power supply and the total amount of power consumption for the power network 31 in each area are estimated. At this time, the power information takes into consideration, the power to be generated and supplied by distributed power generating facilities provided in the power network 31. For this reason, it is possible to prevent a shortage of power supply while effectively utilizing the power generated by distributed power generating facilities.

### (Modified Example)

The system configuration shown in FIG. 1 is just an example, and may be modified according to need. For example, the configuration may be such that only one of the communication network 51 and the road traffic network 52 is used. Additionally, in a case the power management device 20 can directly control and monitor the power network 31 in each area, the power management system 1 may be configured not to include the local power management device 30. On the other hand, in a case where each local power management device 30 can directly communicate with the centralized management device 10, the power management system 1 may be configured not to include the power management device 20. Further, the configuration may be such that one local power management device 30 controls and monitors multiple power networks 31.

Additionally, the charging information estimator 105 may be configured to estimate area identification information of an area where a battery of each vehicle is charged, instead of estimating the position of the power stand 40 at which a battery of each vehicle is charged.

Further, the charging information estimator 105 may be configured to, when multiple charging informations are estimated from one vehicle information, weight each charging information and thereby make the total value of the power consumption at the time of charging for all the charging informations identical to a value of the power consumption at the time of charging when only one charging information is estimated from one vehicle information. According to this configuration, it is possible to prevent the total value of the power consumption at the time of charging for all the charging informations from being greatly deviated from a value of power consumption at the time of actual charging. Accordingly, it is possible to enhance the accuracy of the complementary information generated by the centralized management device 10 and achieve precise management of power among areas.

Moreover, the centralized management device 10 may be configured to receive information relating to the weather from a weather monitoring system and perform a process based on the information relating to the weather. For example, the local power consumption amount estimator 108 increases or decreases by some amount based on the weather, and thereby estimates, the amount of power based on the amount of power generated by solar power generation, which is included in the supplied power included in the power information. In other words, if the weather forecast is fine, the local power consumption amount estimator 108 may increase by the predetermined amount, and thereby estimate, the amount of power based on the amount of power generated by solar power generation. If the weather forecast is cloudy, rain, or snow, the local power consumption amount estimator 108 may decrease by the predetermined amount, and thereby estimate, the amount of power based on the amount of power generated by solar power generation.

Additionally, for example, the local power consumption amount estimator 108 increases or decreases by some amount based on the weather, and thereby estimates, the amount of power based on the amount of power generated by wind power generation, which is included in the supplied power included in the power information. In other words, if the forecast is strong wind, the local power consumption amount estimator 108 may increase by the predetermined amount, and thereby estimate, the amount of power based on the amount of power generated by wind power generation. If the forecast is weak wind, the local power consumption amount estimator 108 may decrease by the predetermined amount, and thereby estimate, the amount of power based on the amount of power generated by wind power generation.

Further, the centralized management device 10 may be configured to receive from an event management system, information relating to an event held in each area, and perform a process based on the information relating to the event. For example, the local charging amount estimator 107 may be configured to set, based on the information relating to the event, in accordance with the scale of the event, a predetermined value to the local charging amount for the area in which the event is held, regardless of the collected vehicle information. Moreover, it is possible to provide a service that notifies, from several days before the date of the event, a driver of a vehicle who is a resident of the area in which the event is held, of information indicating that the power demand will be concentrated locally according to a time zone or a location because of the event, such as "you should charge your car before the date of the event because congestion at power stands is expected from the certain date"

### (Second Embodiment)

Hereinafter, a power management system 1a according to a second embodiment is explained. Constituent elements of the power management system 1a of the second embodiment, which are the same as those of the power management system 1 of the first embodiment, are appended with the same reference numerals, and explanations thereof are omitted here.

A system configuration of the power management system 1a of the second embodiment differs from that of the power management system 1 of the first embodiment in that a local power management device 30a is included in lieu of the local power management device 30 and that a vehicle device 60a is included in lieu of the vehicle device 60. Except for these, the schematic system configuration of the power management system 1a of the second embodiment is the same as that of the power management system 1 of the first embodiment shown in FIG. 1, and therefore explanations thereof are omitted here. Additionally, configurations of the power management device 20, the power network 31, the power stand 40, the traffic information management device 50, the communication network 51, and the road traffic network 52 are the same as those of the first embodiment, and therefore explanations thereof are omitted here.

The local power management device 30a of the second embodiment differs from the local power management device 30 of the first embodiment in that the local power management device 30a does not receive complementary information from the centralized management device 10a and does not perform power management in accordance with the complementary information. The remaining configurations of the local power management device 30a of the second embodiment are the same as those of the local power management device 30 of the first embodiment.

The vehicle device 60a of the second embodiment differs from the vehicle device 60 of the first embodiment in that the vehicle device 60a receives and outputs recommendation information from the centralized management device 10a. The remaining configurations of the vehicle device 60a of the second embodiment are the same as those of the vehicle device 60 of the first embodiment.

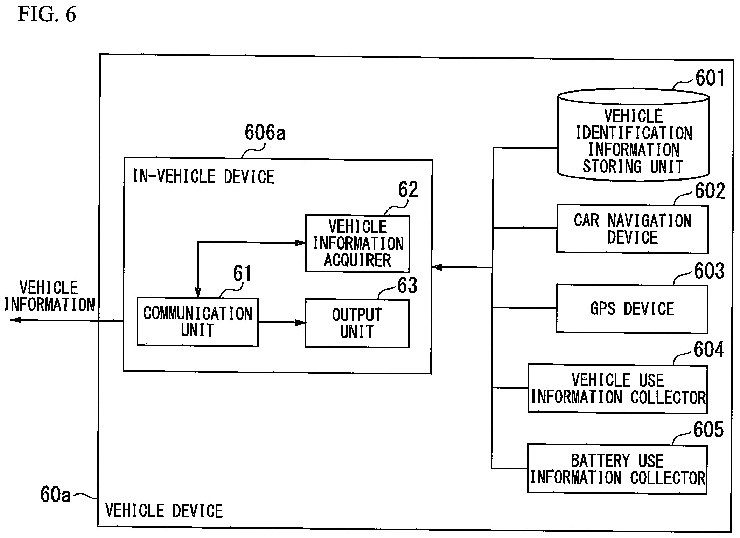

FIG. 6 is a schematic block diagram illustrating a functional configuration of the vehicle device 60a according to the second embodiment. The vehicle device 60a includes a CPU, a memory, and an auxiliary memory device, which are connected by buses, and performs an in-vehicle program. The vehicle device 60a differs from the vehicle device 60 of the first embodiment in that the vehicle device 60a includes an in-vehicle device 606a in lieu of the in-vehicle device 606. The remaining configurations of the vehicle device 60a are the same as those of the vehicle device 60 of the first embodiment. Additionally, a communication unit 61 and a vehicle information acquirer 62 of the in-vehicle device 606a of the second embodiment are the same as those same-named configurations of the in-vehicle device 606 of the first embodiment.

Upon the communication unit 61 receiving recommendation information, the output unit 63 performs an outputting in accordance with the recommendation information. The output unit 63 may include a speaker or the like, and perform the outputting in accordance with the recommendation information, by sound from that speaker. Additionally, the output unit 63 may include a display, and perform an outputting in accordance with the recommendation information, by displaying a screen image on that display. Further, the output unit 63 may instruct the car navigation device 602 to perform an outputting in accordance with the recommendation information. In this case, the outputting is performed by a speaker or a display included in the car navigation device 602.

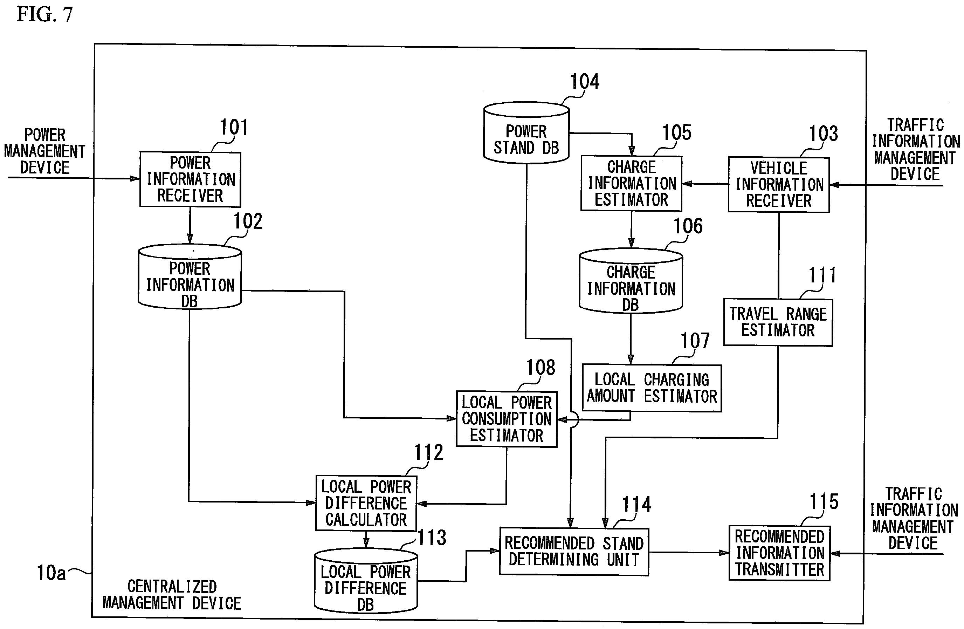

FIG. 7 is a schematic block diagram illustrating a functional configuration of the centralized management device 10a according to the second embodiment. The centralized management device 10a includes a CPU, a memory, and an auxiliary memory device, which are connected by buses, and performs a centralized management program. The centralized management device 10a includes: the power information receiver 101; the power information DB 102; the vehicle information receiver 103; the power stand DB 104; the charging information estimator 105; the charging information DB 106; the local charging amount estimator 107; the local power consumption amount estimator 108; a travel range estimator 111; a local power difference calculator 112; a local power difference DB 113; a recommended stand determining unit 114; and a recommendation information transmitter 115. Here, part or all of the functions of the centralized management device 10a may be implemented by hardware, such as an ASIC, a PLD, and an FPGA. Additionally, among the configurations of the centralized management device 10a, the power information receiver 101, the power information DB 102, the vehicle information receiver 103, the power stand DB 104, the charging information estimator 105, the charging information DB 106, the local charging amount estimator 107, and the local power consumption amount estimator 108 are the same as those same-named configurations of the centralized management device 10 of the first embodiment, and therefore explanations thereof are omitted here.

The travel range estimator 111 estimates, for each vehicle information received by the vehicle information receiver 103, a travel range relating to a vehicle mounted with the vehicle device 60a that is the transmission source of the vehicle information. The travel range includes a preferred travel range and an allowable travel range. The preferred travel range is a range in which the vehicle travels toward the current destination and indicates the range in which the vehicle can travel until the next charging is performed. The allowable travel range is simply a range in which the vehicle can travel until the next charging is performed, regardless of the position of the destination, and indicates the range excluding the preferred travel range.

For example, based on the present remaining power amount included in the vehicle information and a chronological change in power consumption per unit time, the travel range estimator 111 calculates the allowable travel distance that the vehicle can travel. Then, based on the present position of the vehicle, the destination toward which the vehicle is traveling, and the allowable travel distance calculated, the travel range estimator 111 estimates, as the preferred travel range, a range in which the vehicle is likely to travel and can travel without being charged. Then, the travel range estimator 111 estimates the allowable travel range based on the present position of the vehicle, the allowable travel distance, and the preferred travel range. By the above process, the travel range is estimated. At this time, the travel range estimator 111 adds to the information of the travel range, vehicle identification information included in the vehicle information used for the process. Here, the above specific process is just an example, and the travel range may be estimated by another process.

The local power difference calculator 112 calculates the local power difference for the power network 31 in each area, based on the result of the estimation of the local power consumption performed by the local power consumption estimator 108 and the power information stored in the power information DB 102. The local power difference indicates the difference between an estimated value of the total amount of power supplied within a predetermined period and an estimated value of the total amount of power consumed within the predetermined period. For example, the local power difference calculator 112 estimates the total amount of power supplied within a predetermined period from the present time (for example, within three hours), based on the information indicating a chronological change in the amount of power supply to each area, the past statistics, and the like. This estimation process is performed based on an existing estimation algorithm. Then, the local power difference calculator 112 subtracts the result of the estimation of the local power consumption from the result of the estimation of the power supply, thereby calculating the local power difference. Here, the above specific process is just an example, and the local power difference may be estimated by another process.

The local power difference DB 113 is configured with use of a memory device, such as a magnetic hard disk device or a semiconductor memory device. The local power difference DB 113 stores the latest local power difference calculated by the local power difference calculator 112, while associating the latest power difference with the area identification information. More specifically, upon receiving the local power difference from the local power difference calculator 112, the local power difference DB 113 determines whether or not the local power difference has already been stored in association with the same area identification information. If the local power difference has already been stored, the local power difference DB 113 updates the local power difference to the new local power difference. On the other hand, if no local power difference has already been stored in association with the same area identification information, the local power difference DB 113 newly stores that local power difference while associating that local power difference with the area identification information.

The recommended stand determining unit 114 determines the position of the power stand 40 to be recommended to each electric car, based on the local power difference stored in the local power difference DB 113 and the power stand table stored in the power stand DB 104.

For example, the recommended stand determining unit 114 searches from the power stand DB 103, the positions of all the power stands 40 included in the preferred travel range included in the travel range. Then, from the power stands 40 found by the search, the recommended stand determining unit 114 further searches from the power stands 40 searched, the power stand 40 belonging to the area associated with the local power difference having a positive value, that is, the power stand 40 provided in the power network 31 having the surplus power. If such the power stand 40 is retrieved as a result of the search, the recommended stand determining unit 114 determines the position of the power stand 40 searched, as the position of the power stand 40 to be recommended.

If the power stand 40 belonging to the area associated with the local power difference having a positive value cannot be found by the search from among the power stands 40 included in the preferred travel range, the recommended stand determining unit 114 searches from the power stand DB 103, the positions of all the power stands 40 included in the allowable travel range. Then, from the power stands 40 found by the search, the recommended stand determining unit 114 further searches the power stand 40 belonging to the area associated with the local power difference having a positive value, that is, the power stand 40 provided in the power network 31 having the surplus power. If such the power stand 40 is retrieved as a result of the search, the recommended stand determining unit 114 determines the position of the power stand 40 found by the search, as the position of the power stand 40 to be recommended. From whichever travel range the result of the determination is obtained, the recommended stand determining unit 114 generates recommendation information indicating the position of the power stand 40 determined, and adds to the recommendation information, the vehicle identification information added to the travel range used for the determining process.

Here, whichever of the preferred travel range and the allowable travel range is used, the recommended stand determining unit 114 may determine, as the power stand 40 to be most recommended, the power stand 40 provided in the area associated with the local power difference having the greatest value. The recommended stand determining unit 114 may generate recommendation information using only the position of the one power stand 40 or the positions of multiple power stands 40.

The recommendation information transmitter 115 is configured with use of a device having a communication function. The recommendation information transmitter 115 transmits to the traffic information management device 50, the recommendation information generated by the recommended stand determining unit 114.

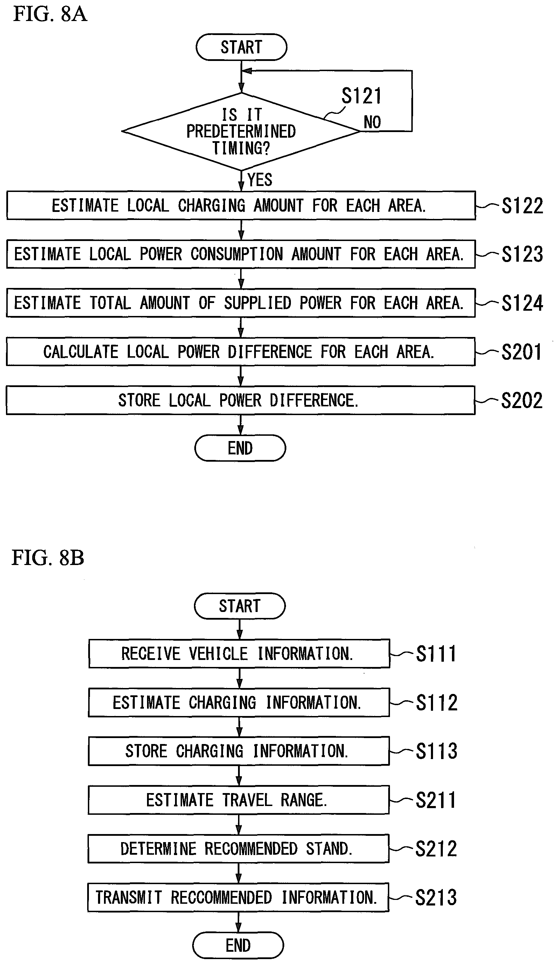

FIGS. 8A and 8B are flowcharts illustrating process flows for the centralized management device 10a of the second embodiment. FIG. 8A is a flowchart illustrating a process flow relating to calculation of the local power difference. FIG. 8B is a flowchart illustrating a process flow relating to transmission of the recommendation information.

Firstly, the process relating to calculation of the local power difference is explained with reference to FIG. 8A. Here, in the flowchart shown in FIG. 8A, the processes in steps S121 to S124 are the same as those processes shown in FIG. 4C appended with the same reference numerals, and therefore explanations thereof are omitted here. After the process shown in step S124, the local power difference calculator 112 calculates the local power difference for each area (step S201). Then, the local power difference DB 113 stores the latest local power difference calculated by the local power difference calculator 112, while associating the latest local power difference with the area identification information (step S202).

Next, a process flow relating to transmission of recommendation information is explained with reference to FIG. 8B. Here, in the flowchart shown in FIG. 8B, the processes in steps S111 to S113 are the same as those processes shown in FIG. 4B appended with the same reference numerals, and therefore explanations thereof are omitted here. After the process shown in step S113, the travel range estimator 111 estimates a travel range with respect to the vehicle information received by the vehicle information receiver 103 (step S211). Then, the recommended stand determining unit 114 determines the position of the power stand 40 to be recommended (recommended stand) (step S212). Then, the recommendation information transmitter 115 transmits to the vehicle device 60a, information indicating the determined position of the power stand 40 to be recommended, as recommendation information (step S213).

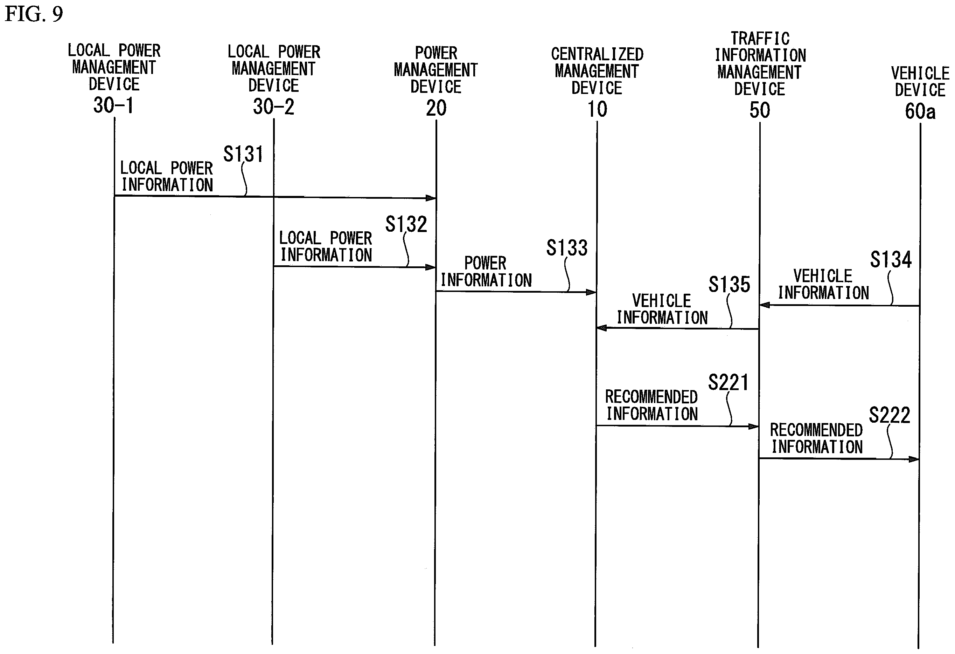

FIG. 9 is a sequence chart illustrating a data flow among devices included in the power management system 1a of the second embodiment. Here, in the sequence chart shown in FIG. 9, the processes in steps S131 to S135 are the same as those processes of the first embodiment shown in FIG. 5 appended with the same reference numerals, and therefore explanations thereof are omitted here. After the process shown in step S135, the centralized management device 10 determines the position of the power stand 40 to be recommended to the vehicle device 60a, and generates recommendation information indicating this position. Then, the centralized management device 10 transmits the generated recommendation information to the traffic information management device 50 (step S221). Upon receiving the recommendation information, the traffic information management device 50 determines the vehicle device 60a corresponding to the vehicle identification information added to the received recommendation information, and transmits the recommendation information to that vehicle device 60a (step S222).

The communication unit 61 of the vehicle device 60a receives the recommendation information. Based on the received recommendation information, the output unit 63 outputs the position of the power stand 40 to be recommended. For example, the output unit 63 outputs by sound a message indicating the position of the power stand 40. At this time, the output unit 63 may output the sound from a speaker included in the in-vehicle device 606a, or from a speaker included in the car navigation device 602. Alternatively, the output unit 63 may output by image a map image showing the position of the power stand 40. At this time, the output unit 63 may output the image with a display included in the in-vehicle device 606a, or with a display included in the car navigation device 602. By the output of the output unit 63, the crews recognize the position of the recommended stand.

In the power management system 1a of the second embodiment having the above configuration, vehicle information is collected from the vehicle device 60a mounted on an electric car. Then, an area, a time, and power consumption, where a battery of each electric car is charged, are estimated. Based on a result of the estimation, the local power difference for the power network 31 in each area is estimated. Then, the position of the power stand 40 in the power network 31 estimated to have a surplus in power is searched based on the result of the estimation. Then, the position of the power stand 40 to be recommended is determined and transmitted to each vehicle device 60a. A driver of the electric car moves to the position of the recommended power stand 40 and charges the electric car, thereby preventing a shortage of power supply to each power network 31.

Additionally, in determining the position of the power stand 40 to be recommended, the preferred travel range and the allowable travel range are estimated as a travel range for each vehicle. Then, if the position of the power stand 40 to be recommended is found by search from the preferred travel range, the position of the power stand 40 in the preferred travel range is transmitted as recommendation information, regardless of whether or not the power stand 40 to be recommended is present in the allowable travel range. For this reason, the driver of the electric car can go to the recommended power stand 40 on the way from the present position to the destination. Accordingly, it is easier for each driver to charge an electric car at the recommended power stand 40. Consequently, the number of drivers following the recommendation increases, thereby effectively preventing a shortage of the power supply to each power network 31.

### (Modified Example)

The recommended stand determining unit 114 may be configured to add to the recommendation information, coupon information that can be used when charging is performed at the recommended power stand 40. Additionally, the recommended stand determining unit 114 may be configured not to add the coupon information when the power stand 40 to be recommended is found by search from the preferred travel range, and add the coupon information when the power stand 40 to be recommended is found by search from the allowable travel range. Further, the configuration of the power management system 1a of the second embodiment may be modified similarly to the modification of the power management system 1 of the first embodiment.

### (Third Embodiment)

Next, the power management system 1b according to the third embodiment is explained. Here, constituent elements of the power management system 1b of the third embodiment, which are the same as those of the power management system 1 of the first embodiment, are appended with the same reference numerals, and explanations thereof are omitted here.

The system configuration of the power management system 1b of the third embodiment differs from that of the vehicle device 60 of the first embodiment in that a vehicle device 60a is included in lieu of the vehicle device 60. Except for this, the schematic system configuration of the power management system 1b of the third embodiment is the same as the system configuration of the power management system 1 of the first embodiment shown in FIG. 1, and therefore explanations thereof are omitted here. Additionally, the configurations of the power management device 20, the local power management device 30, the power network 31, the power stand 40, the traffic information management device 50, the communication network 51, and the road traffic network 52 are the same as those of the first embodiment, and therefore explanations thereof are omitted here. Further, the configuration of the vehicle device 60a is the same as that of the second embodiment, and therefore explanations thereof are omitted here.

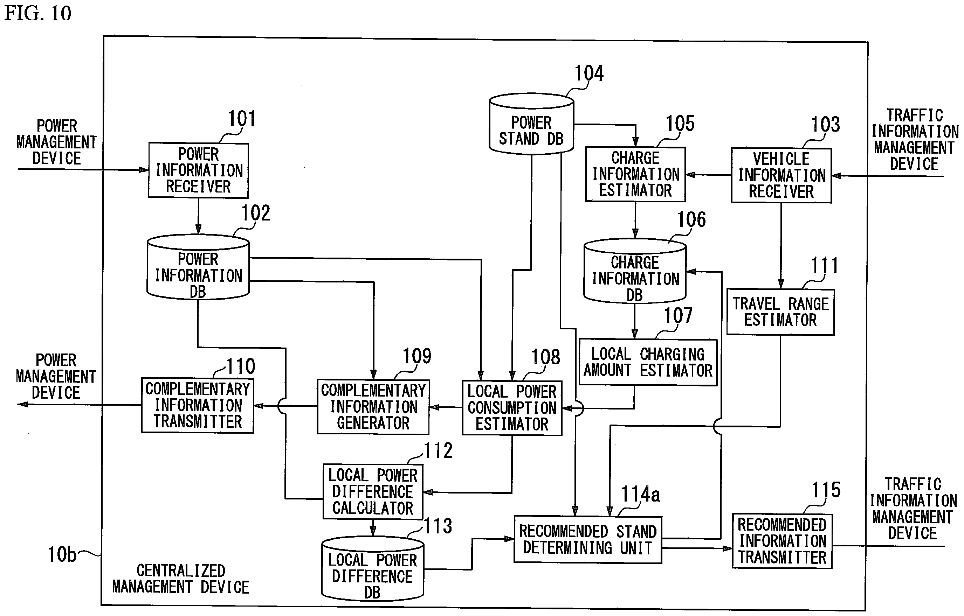

FIG. 10 is a schematic block diagram illustrating a functional configuration of a centralized management device 10b according to the third embodiment. The centralized management device 10b includes a CPU, a memory, an auxiliary memory device, and the like, which are connected by buses, and performs a centralized management program. The centralized management device 10b includes: the power information receiver 101; the power information DB 102; the vehicle information receiver 103; the power stand DB 104; the charging information estimator 105; the charging information DB 106; the local charging amount estimator 107; the local power consumption amount estimator 108; the complementary information generator 109; the complementary information transmitter 110; the travel range estimator 111; the local power difference calculator 112; the local power difference DB 113; a recommended stand determining unit 114a; and the recommendation information transmitter 115. Here, part or all of the functions of the centralized management device 10b may be implemented by hardware, such as an ASIC, a PLD, or an FPGA. Additionally, among the configurations of the centralized management device 10b, the power information receiver 101, the power information DB 102, the vehicle information receiver 103, the power stand DB 104, the charging information estimator 105, the charging information DB 106, the local charging amount estimator 107, and the local power consumption amount estimator 108, the complementary information generator 109, and the complementary information transmitter 110 are the same as those same-named configurations of the centralized management device 10 of the first embodiment, and therefore explanations thereof are omitted here. Moreover, among the configurations of the centralized management device 10b, the travel range estimator 111, the local power difference calculator 112, the local power difference DB 113, and the recommendation information transmitter 115 are the same as those same-named configurations of the centralized management device 10b of the second embodiment, and therefore explanations thereof are omitted here.

The recommended stand determining unit 114a differs from the recommended stand determining unit 114 of the second embodiment in that the recommended stand determining unit 114a rewrites the charging information stored in the charging information DB 106, while associating that charging information with the vehicle identification information added to the travel range used in the determining process. The other configurations of the recommended stand determining unit 114a are the same as those of the recommended stand determining unit 114 of the second embodiment, and therefore explanations thereof are omitted here.

A specific rewriting process for the recommended stand determining unit 114a is explained here. The recommended stand determining unit 114a searches from among the charging information stored in the charging information DB 106, the charging information stored in association with the vehicle identification information that has been added to the travel range used for the determining process. Then, the recommended stand determining unit 114a rewrites the searched charging information under the assumption that charging is performed at the determined power stand 40 to be recommended. In other words, the recommended stand determining unit 114a rewrites the position of the power stand 40 at which the battery of the vehicle is charged, which is included in the charging information, to the position of the power stand 40 to be recommended. Additionally, the recommended stand determining unit 114a estimates the time at which the vehicle arrives at the position of the power stand 40 to be recommended, and rewrites the time at which charging is performed, which is included in the charging information, to the estimated time. Then, the recommended stand determining unit 114a calculates the power consumption at the time of performing charging at that power stand 40 by the same algorithm as used by the charging information estimator 105, and rewrites the power consumption, which is included in the charging information, to the calculated power consumption.

In the power management system 1b of the third embodiment which has the above configuration, transmission of complementary information to the local power management 30 and transmission of recommendation information to the vehicle 60 are performed respectively. For this reason, it is possible to achieve similar effects to those achieved by the power management system 1 of the first embodiment and the power management system 1a of the second embodiment, or synergistic effect caused by a combination of those two systems. Additionally, when the power stand 40 to be recommended is reported to the vehicle device 60, the charging information stored in the charging information DB 106 is rewritten. For this reason, it is possible to generate the complementary information more accurately, thereby more accurately prevent a shortage of power supply to each power network 31.

### (Modified Example)

The power management system 1b of the third embodiment may be modified similarly to the modification of the power management system 1 of the first embodiment and the modification of the power management system 1a of the second embodiment.

Although the embodiments of the present invention have explained above in detail with reference to the drawings, specific configurations are not limited to those embodiments, and various design modifications may be made without departing from the scope of the present invention.

### INDUSTRIAL APPLICABILITY

The present invention is applicable to a power management system for charging electric cars, and the like.

### DESCRIPTION OF REFERENCE NUMERALS

- 10:: centralized management device (management device)
- 20:: power management device
- 30:: local power management device
- 31:: power network
- 40:: power stand
- 50:: traffic information management device
- 51:: communication network
- 52:: road traffic network
- 60:: vehicle device
- 101:: power information receiver
- 102:: power information DB
- 103:: vehicle information receiver
- 104:: power stand DB
- 105:: charging information estimator
- 106:: charging information DB
- 107:: local charging amount estimator
- 108:: local power consumption amount estimator
- 109:: complementary information generator
- 110:: complementary information transmitter
- 111:: travel range estimator
- 112:: local power difference calculator (surplus estimator)
- 113:: local power difference DB
- 114:: recommended stand determining unit (communication unit)
- 115:: recommendation information transmitter (communication unit)
- 606:: in-vehicle device
- 61:: communication unit
- 62:: vehicle information acquirer
- 63:: output unit

## Claims

1. A management device (10) comprising:
a vehicle information receiver (103) configured to receive from a vehicle configured to travel by battery power, vehicle information relating to travel of the vehicle;
a power information receiver (101) configured to receive from a local power management device (30) configured to control power supply to a power network (31) in each area, power information relating to power for the power network (31) ;
a charging information estimator (105) configured to calculate, for each vehicle, power consumption amount of the vehicle based on a distance for the vehicle from a present position to reach a power stand (40) which is configured to charge the vehicle in an area in which the vehicle performs charging of power next time, based on the vehicle information , and estimate power consumption amount of the power stand (40) based on a remaining power of a battery of the vehicle and power consumption amount; and
a local power consumption amount estimator (108) configured to estimate a power consumption amount for the power network (31) in each area, based on a result of estimation by the charging information estimator (105) and the power information.

2. The management device (10) according to claim 1, further comprising:
a local charging amount estimator (107) configured to estimate the total amount of power consumption amount for the power network (31) in each area, the power consumption amount being caused by the charging of power to the vehicle,
wherein the local power consumption amount estimator (108) is configured to estimate a power consumption amount for the power network (31) in each area, based on a result of estimation by the local charging amount estimator (107) and the power information.

3. The management device (10) according to claim 1 or 2, further comprising:
a complementary information generator (109) configured to estimate a surplus or shortage of a power supply amount for the power network (31) in each area, based on the result of estimation by the local power consumption amount estimator and the power information, the complementary information generator (109) being configured to generate complementary information for instructing to distribute a part of all of power supply to a power network (31) in an area estimated to have a surplus in the power supply amount, to a power network (31) in an area estimated to be short of the power supply amount; and
a complementary information transmitter (110) configured to transmit the complementary information to the local power management device (30).

4. The management device (10) according to claim 1 or 2, further comprising:
a travel range estimator (111) configured to estimate, for each vehicle, a travel range that the vehicle travels by the time at which the vehicle performs the charging of power the next time;
a surplus estimator (112) configured to estimate a surplus or shortage of a power supply amount for the power network (31) in each area, based on the result of estimation by the local power consumption amount estimator and the power information;
a power stand database configured to store information indicating a position of the power stand (40) at which the charging of power to the vehicle is performed and a power network (31) to be supplied with power; and
a reporter configured to search from the power stand database, the power stand (40) to be supplied with power from the power network (31) that is present in the travel range and estimated by the surplus estimator (112) to have a surplus of the power supply amount, the reporter being configured to report information of the power stand (40) to the vehicle.

5. A management method comprising:
a step of receiving from a vehicle configured to travel by battery power, vehicle information relating to travel of the vehicle;
a step of receiving from a local power management device (30) configured to control power supply to a power network (31) in each area, power information relating to power for the power network (31);
a step of estimating power consumption amount of a power stand (40) by calculating, for each vehicle, power consumption amount of the vehicle based on a distance for the vehicle from a present position to reach the power stand (40) which is configured to charge the vehicle in an area in which the vehicle performs charging of power next time, based on the vehicle information, and estimating power consumption amount of the power stand (40) based on a present remaining power of a battery of the vehicle and the power consumption amount; and
a step of estimating a power consumption amount for the power network (31) in each area, based on a result of estimation by the charging information estimator (105) and the power information.

6. A computer program causing a computer to execute the method according to claim 5.

7. A management system (1) comprising:
the management device (10) according to anyone of claims 1 to 4;
a local power management device (30) configured to control power supply to a power network in each area; and
an in-vehicle device (606) configured to be mounted on the vehicle configured to travel by battery power,
wherein the in-vehicle device (606) comprises:
a vehicle information acquirer (62) configured to acquire the vehicle information relating to travel of the vehicle; and
a communication unit (61) configured to transmit the vehicle information to the management device (10)..

8. The management system (1) according to claim 7, wherein the in-vehicle device (606) further comprises an output unit (63) configured to output information to a crew of the vehicle,
the communication unit (61) is configured to receive information of the power stand (40) from the management device (10), and
the output unit (63) is configured to output the information of the power stand (40) received by the communication unit (61).

## Patentansprüche

1. Managementvorrichtung (10) mit:
einem Fahrzeuginformationsempfänger (103), der ausgestaltet ist, um von einem zum Reisen mit Batterieleistung ausgestalteten Fahrzeug Fahrzeuginformation bezüglich einer Reise des Fahrzeugs zu empfangen;
einem Leistungsinformationsempfänger (101), der ausgestaltet ist, um von einer zur Steuerung der Leistungszufuhr zu einem Leistungsnetzwerk (31) in jedem Bereich ausgestalteten lokalen Leistungsmanagementvorrichtung (30) Leistungsinformation bezüglich einer Leistung für das Leistungsnetzwerk (31) zu empfangen;
einer Ladeinformationsabschätzvorrichtung (105), die ausgestaltet ist, um für jedes Fahrzeug eine Leistungsverbrauchsmenge des Fahrzeugs beruhend auf einem Abstand des Fahrzeugs von einer gegenwärtigen Position bis zum Erreichen einer zum Laden des Fahrzeugs ausgestalteten Ladestation (40) in einem Bereich, in dem das Fahrzeug ein Laden das nächste Mal ausführen wird, beruhend auf der Fahrzeuginformation zu berechnen, und um die Leistungsverbrauchsmenge der Ladestation (40) beruhend auf der verbleibenden Leistung einer Batterie des Fahrzeugs und der Leistungsverbrauchsmenge abzuschätzen; und
einer lokalen Leistungsverbrauchsmengenabschätzvorrichtung (108), die ausgestaltet ist, um die Leistungsverbrauchsmenge für das Leistungsnetzwerk (31) in jedem Bereich abzuschätzen, beruhend auf einem Ergebnis der Abschätzung durch die Ladeinformationsabschätzvorrichtung (105) und der Leistungsinformation.

2. Managementvorrichtung (10) nach Anspruch 1 des Weiteren mit:
einer lokalen Lademengenabschätzvorrichtung (107), die ausgestaltet ist, um die Gesamtmenge der Leistungsverbrauchsmengen für das Leistungsnetzwerk (31) in jedem Bereich abzuschätzen, wobei die Leistungsverbrauchsmenge durch das Laden der Leistung zu dem Fahrzeug verursacht wird,
wobei die lokale Leistungsverbrauchsmengenabschätzvorrichtung (108) ausgestaltet ist, um eine Leistungsverbrauchsmenge für das Leistungsnetzwerk (31) in jedem Bereich abzuschätzen, beruhend auf einem Ergebnis der Abschätzung durch die lokale Ladungsmengenabschätzvorrichtung (107) und der Leistungsinformation.

3. Managementvorrichtung (10) nach Anspruch 1 oder 2, des Weiteren mit:
einem Komplementärinformationsgenerator (109), der ausgestaltet ist, um einen Überschuss oder einen Unterschuss einer Leistungszufuhrmenge für das Leistungsnetzwerk (31) in jedem Bereich abzuschätzen, beruhend auf dem Ergebnis der Abschätzung durch die lokale Leistungsverbrauchsmengenabschätzvorrichtung und der Leistungsinformation, wobei der Komplementärinformationsgenerator (109) ausgestaltet ist, um Komplementärinformation zu erzeugen, um eine Verteilung eines Teiles der Gesamtleistungszufuhr von einem Leistungsnetzwerk (31) in einem Bereich, von dem angenommen wird, das er einen Überschuss in der Leistungszufuhrmenge hat, zu einem Leistungsnetzwerk (31) in einem Bereich, von dem angenommen wird, das er einen Unterschuss an Leistungszufuhrmenge hat, anzuweisen;
einem Komplementärinformationstransmitter (110), der ausgestaltet ist, um die Komplementärinformation an die lokale Leistungsmanagementvorrichtung (30) zu übertragen.

4. Managementvorrichtung (10) nach Anspruch 1 oder 2, des Weiteren mit:
einer Reisereichweiteabschätzvorrichtung (111), die ausgestaltet ist, um für jedes Fahrzeug eine Reisereichweite zu bestimmen, die das Fahrzeug reisen kann, zu der Zeit, zu der das Fahrzeug das Laden der Leistung das nächste Mal ausführt;
einer Überschussabschätzvorrichtung (112), die ausgestaltet ist, um einen Überschuss oder einen Unterschuss einer Leistungszufuhrmenge für das Leistungsnetzwerk (31) in jedem Bereich beruhend auf dem Ergebnis der Abschätzung durch die lokale Leistungsverbrauchsmengenabschätzvorrichtung und der Leistungsinformation abzuschätzen;
einer Ladestationsdatenbank, die ausgestaltet ist, um Information zu speichern, welche eine Position der Ladestation (40) anzeigt, an der das Laden der Leistung zu dem Fahrzeug ausgeführt wird, und eines Leistungsnetzwerks (31), das mit Leistung zu versorgen ist;
eine Benachrichtigungsvorrichtung, die ausgestaltet ist, um aus der Ladestationsdatenbank die Ladestation (40) auszusuchen, zu der Leistung von dem Leistungsnetzwerk (31) zuzuführen ist, die in der Reisereichweite vorhanden ist, und von der durch die Überschussabschätzvorrichtung (112) abgeschätzt wurde, dass sie einen Überschuss an Leistungszufuhrmenge hat, wobei die Benachrichtigungsvorrichtung ausgestaltet ist, um Information der Ladestation (40) an das Fahrzeug zu berichten.

5. Managementvorrichtung (10) mit:
einem Schritt zum Empfang von einem für eine Reise mit Batterieleistung ausgestalteten Fahrzeug von Fahrzeuginformation bezüglich der Reise des Fahrzeugs;
einem Schritt zum Empfangen von einer lokalen Leistungsmanagementvorrichtung (30), die zum Steuern von Leistungszufuhr zu einem Leistungsnetzwerk (31) in jedem Bereich ausgestaltet ist, von Leistungsinformation bezüglich der Leistung für das Leistungsnetzwerk (31);
einem Schritt zum Abschätzen der Leistungsverbrauchsmenge einer Ladestation (40) durch Berechnen für jedes Fahrzeug der Leistungsverbrauchsmengen des Fahrzeugs beruhend auf einem Abstand des Fahrzeugs von einer gegenwärtigen Position bis zum Erreichen einer Ladestation (40), die ausgestaltet ist, um das Fahrzeug zu laden, in einem Bereich, in dem das Fahrzeug das Laden der Leistung das nächste Mal durchführt, beruhend auf der Fahrzeuginformation, und zum Abschätzen der Leistungsverbrauchsmenge der Ladestation (40) beruhend auf der gegenwärtigen verbleibenden Leistung einer Batterie des Fahrzeugs und der Leistungsverbrauchsmenge; und
einem Schritt zum Abschätzen der Leistungsverbrauchsmenge für das Leistungsnetzwerk (31) in jedem Bereich beruhend auf einem Ergebnis der Abschätzung durch die Ladeinformationsabschätzvorrichtung (105) und der Leistungsinformation.

6. Computerprogramm zur Veranlassung eines Computers zur Ausführung eines Verfahrens nach Anspruch 5.

7. Managementsystem (1) mit:
der Managementvorrichtung (10) entsprechend einem der Ansprüche 1 bis 4;
einer lokalen Leistungsmanagementvorrichtung (30), die ausgestaltet ist, um Leistungszufuhr zu einem Leistungsnetzwerk in jedem Bereich zu steuern; und
einer fahrzeugseitigen Vorrichtung (606), die ausgestaltet ist, um an einem zur Reise mit Batterieleistung ausgestalteten Fahrzeug angebracht zu werden;
wobei die fahrzeugseitige Vorrichtung (606) enthält:
eine Fahrzeuginformationserfassungseinheit (62), die ausgestaltet ist, um Fahrzeuginformation bezüglich der Reise des Fahrzeugs zu erfassen; und
einer Kommunikationseinheit (61), die ausgestaltet ist, um die Fahrzeuginformation an die Managementvorrichtung (10) zu übertragen.

8. Managementsystem nach Anspruch 7, bei der die fahrzeugseitige Vorrichtung (606) des Weiteren eine Ausgabeeinheit (63) enthält, die ausgestaltet ist, um Information an eine Besatzung des Fahrzeugs auszugeben,
wobei die Kommunikationseinheit (61) ausgestaltet ist, um Information der Ladestation (40) von der Managementvorrichtung (10) zu empfangen, und
wobei die Ausgabeeinheit (63) ausgestaltet ist, um die Information der Ladestation (40) auszugeben, die von der Kommunikationseinheit (61) empfangen wurde.

## Revendications

1. Dispositif de gestion (10) comprenant :
un récepteur d'informations de véhicule (103) configuré pour recevoir en provenance d'un véhicule configuré pour se déplacer par une alimentation par batterie, des informations de véhicule concernant un déplacement du véhicule ;
un récepteur d'informations d'alimentation (101) configuré pour recevoir en provenance d'un dispositif de gestion d'alimentation locale (30) configuré pour commander une alimentation électrique à un réseau d'alimentation (31) dans chaque zone, des informations d'alimentation concernant une alimentation pour le réseau d'alimentation (31) ;
un estimateur d'informations de charge (105) configuré pour calculer, pour chaque véhicule, une quantité de consommation d'alimentation du véhicule d'après une distance pour que le véhicule depuis une position actuelle atteigne un stand d'alimentation (40) qui est configuré pour charger le véhicule dans une zone où le véhicule réalise une charge en alimentation la fois suivante, d'après les informations de véhicule, et estimer une quantité de consommation d'alimentation du stand d'alimentation (40) d'après une alimentation restante d'une batterie du véhicule et une quantité de consommation d'alimentation ; et
un estimateur de quantité de consommation d'alimentation locale (108) configuré pour estimer une quantité de consommation d'alimentation pour le réseau d'alimentation (31) dans chaque zone, d'après un résultat d'estimation par l'estimateur d'informations de charge (105) et les informations d'alimentation.

2. Dispositif de gestion (10) selon la revendication 1, comprenant en outre :
un estimateur de quantité de charge locale (107) configuré pour estimer la quantité totale de quantité de consommation d'alimentation pour le réseau d'alimentation (31) dans chaque zone, la quantité de consommation d'alimentation étant provoquée par la charge en alimentation du véhicule,
dans lequel l'estimateur de quantité de consommation d'alimentation locale (108) est configuré pour estimer une quantité de consommation d'alimentation pour le réseau d'alimentation (31) dans chaque zone, d'après un résultat d'estimation par l'estimateur de quantité de charge locale (107) et les informations d'alimentation.

3. Dispositif de gestion (10) selon la revendication 1 ou 2, comprenant en outre :
un générateur d'informations complémentaires (109) configuré pour estimer un surplus ou une pénurie d'une quantité d'alimentation électrique pour le réseau d'alimentation (31) dans chaque zone, d'après le résultat d'estimation par l'estimateur de quantité de consommation d'alimentation locale et les informations d'alimentation, le générateur d'informations complémentaires (109) étant configuré pour générer des informations complémentaires pour donner l'instruction de distribuer une partie de toute l'alimentation électrique à un réseau d'alimentation (31) dans une zone estimée comme ayant un surplus dans la quantité d'alimentation électrique, à un réseau d'alimentation (31) dans une zone estimée comme étant à court de la quantité d'alimentation électrique ; et
un émetteur d'informations complémentaires (110) configuré pour émettre les informations complémentaires au dispositif de gestion d'alimentation locale (30).

4. Dispositif de gestion (10) selon la revendication 1 ou 2, comprenant en outre :
un estimateur de plage de déplacement (111) configuré pour estimer, pour chaque véhicule, une plage de déplacement sur laquelle le véhicule se déplace au moment où le véhicule réalise la charge en alimentation la fois suivante ;
un estimateur de surplus (112) configuré pour estimer un surplus ou une pénurie d'une quantité d'alimentation électrique pour le réseau d'alimentation (31) dans chaque zone, d'après le résultat d'estimation par l'estimateur de quantité de consommation d'alimentation locale et les informations d'alimentation ;
une base de données de stand d'alimentation configurée pour stocker des informations indiquant une position du stand d'alimentation (40) à laquelle la charge en alimentation du véhicule est réalisée et un réseau d'alimentation (31) à alimenter électriquement ; et
un dispositif de signalement configuré pour rechercher dans la base de données de stand d'alimentation, le stand d'alimentation (40) à alimenter électriquement depuis le réseau d'alimentation (31) qui est présent dans la plage de déplacement et estimé par l'estimateur de surplus (112) comme ayant un surplus de la quantité d'alimentation électrique, le dispositif de signalement étant configuré pour signaler des informations du stand d'alimentation (40) au véhicule.

5. Procédé de gestion comprenant :
une étape de réception en provenance d'un véhicule configuré pour se déplacer par une alimentation par batterie, d'informations de véhicule concernant un déplacement du véhicule ;
une étape de réception en provenance d'un dispositif de gestion d'alimentation locale (30) configuré pour commander une alimentation électrique à un réseau d'alimentation (31) dans chaque zone, d'informations d'alimentation concernant une alimentation pour le réseau d'alimentation (31) ;
une étape d'estimation de quantité de consommation d'alimentation d'un stand d'alimentation (40) en calculant, pour chaque véhicule, une quantité de consommation d'alimentation du véhicule d'après une distance pour que le véhicule depuis une position actuelle atteigne le stand d'alimentation (40) qui est configuré pour charger le véhicule dans une zone où le véhicule réalise une charge en alimentation la fois suivante, d'après les informations de véhicule, et en estimant une quantité de consommation d'alimentation du stand d'alimentation (40) d'après une alimentation restante actuelle d'une batterie du véhicule et la quantité de consommation d'alimentation ; et
une étape d'estimation d'une quantité de consommation d'alimentation pour le réseau d'alimentation (31) dans chaque zone, d'après un résultat d'estimation par l'estimateur d'informations de charge (105) et les informations d'alimentation.

6. Programme d'ordinateur amenant un ordinateur à exécuter le procédé selon la revendication 5.

7. Système de gestion (1) comprenant :
le dispositif de gestion (10) selon l'une quelconque des revendications 1 à 4 ;
un dispositif de gestion d'alimentation locale (30) configuré pour commander une alimentation électrique à un réseau d'alimentation dans chaque zone ; et
un dispositif embarqué (606) configuré pour être monté sur le véhicule configuré pour se déplacer par une alimentation par batterie,
dans lequel le dispositif embarqué (606) comprend :
un dispositif d'acquisition d'informations de véhicule (62) configuré pour acquérir les informations de véhicule concernant un déplacement du véhicule ; et
une unité de communication (61) configurée pour émettre les informations de véhicule au dispositif de gestion (10).

8. Système de gestion (1) selon la revendication 7, dans lequel le dispositif embarqué (606) comprend en outre une unité de sortie (63) configurée pour fournir en sortie des informations à un équipage du véhicule,
l'unité de communication (61) est configurée pour recevoir des informations du stand d'alimentation (40) en provenance du dispositif de gestion (10), et
l'unité de sortie (63) est configurée pour fournir en sortie les informations du stand d'alimentation (40) reçues par l'unité de communication (61).
